# EUROPÄISCHE PATENTSCHRIFT

(11) **EP 2 363 273 B1**
(45) Veröffentlichungstag und Bekanntmachung des Hinweises auf die Patenterteilung: **07.11.2018**
(21) Anmeldenummer: 11001772.0
(22) Anmeldetag: 03.03.2011
(51) Int. Cl.: B29C 70/38, B29C 70/74, B60B 5/02, B29B 11/16, B29L 31/32

(54) **Verfahren zur Herstellung einer Radfelge**
Method for producing a wheel rim
Procédé de fabrication d'une jante

(30) Priorität: 05.03.2010 DE 102010010512
(43) Veröffentlichungstag der Anmeldung: 07.09.2011
(60) Teilanmeldung: 18000755.1
(73) Patentinhaber: ThyssenKrupp Carbon Components GmbH, 01723 Wilsdruff STT Kesselsdorf (DE)
(72) Erfinder: Hufenbach, Werner, Prof.Dr.Ing.-habil., 01324 Dresden (DE); Lepper, Martin, Dr.-Ing., 01279 Dresden (DE); Werner, Jens, Dipl.-Ing., 01640 Coswig (DE)

(56) Entgegenhaltungen:
- WO-A1-02/20252
- DE-A1- 10 006 400
- DE-A1-102006 051 867
- US-A- 4 532 097
- US-A1- 2005 042 109
- US-A1- 2005 104 441
- US-A1- 2005 121 970

## Beschreibung

Die Erfindung betrifft ein Verfahren zur Herstellung einer Radfelge zum Einsatz in der Kraftfahrzeugtechnik, bestehend aus einem ersten, hohlprofiliertem Bauelement (Felgenbett) aus Faserverbundwerkstoff und einem zweiten Bauelement (Radscheibe), wobei in einer Vorfertigungsphase zur Vorfertigung des ersten Bauelements (Felgenbetts) eine Preform dieses Bauelements als Zwischenprodukt gebildet wird, wobei die Preform durch Ablage eines Fasermaterials auf einem die Kontur des ersten Bauelements (Felgenbetts) abbildenden Formwerkzeug zu einem Fasergebilde entsprechend der Bauteilgeometrie des ersten Bauelements (Felgenbetts) geformt wird und nach der Vorfertigungsphase die Preform durch Konsolidierung verfestigt wird.

Es ist bereits bekannt hohlprofilartige Bauteile, wie Räder beziehungsweise Radfelgen, für Leichtbauanwendungen vollständig oder partiell aus Faserverbundwerkstoff zu fertigen.

Werden diese Bauteile monolithisch (ganzheitlich) aus Faserverbundstoff hergestellt, wird auf einem Formwerkzeug, das das Bauteil abbildet, Fasermaterial manuell oder maschinell abgelegt, angeformt und zu einer Preform gebildet. Diese Preform ist ein der Bauteilgeometrie entsprechend geformtes Fasergebilde als Zwischenprodukt, welche anschließend durch Konsolidierung (Wärmebehandlung und /oder Imprägnierung mit Zusatzstoffen) verfestigt wird.

Eine derartige ganzheitliche Herstellung einer Radfelge aus Faserverbundwerkstoff ist aus der Druckschrift DE 10 2005 041 940 A1 bekannt. Diese Radfelge wird einteilig aus einem Geflechtschlauch hergestellt, wobei der Geflechtschlauch über Stützkerne oder zueinander fixierte Ringe, die die Form der Radfelge ergeben, gezogen und fixiert wird, anschließend der vorfixierte Schlauch zur Konsolidierung in ein Konsolidierungswerkzeug eingebracht und mit einem Matrixmaterial infiltriert wird. Damit werden mit einem einzigen Geflechtschlauch sowohl die Radscheibe als auch das Felgenbett mit den Felgenhörnern ausgebildet.

Resultierend aus der Geometrie der hohlprofilartigen Bauteile, wie Radfelgen, ist eine monolithische (ganzheitliche) Herstellung aus Faserverbundwerkstoff nur mit sehr hohem manuellem Aufwand möglich. Außerdem ergeben sich aufgrund der eingeschränkten Möglichkeiten der Ausrichtung der Fasern erhebliche Nachteile hinsichtlich der mechanischen Beanspruchbarkeit solcher hohlprofilartigen Bauteile, wie Radfelgen.

Entsprechend der Anforderungen des Leichtbaus und der Beanspruchbarkeit werden insbesondere Radfelgen, belastungsspezifisch in Einzelteilen vorgefertigt und anschließend zusammengefügt. Dabei können in großer Variation vorgefertigten Bauelemente aus Faserverbundstoff mit individueller Faserstruktur und -ausrichtung miteinander oder mit Bauelementen aus anderweitigem Material, wie Metall, kombiniert werden.

Die Druckschriften US 4 532 097, DE 100 06 400 A1, DE 41 23 459 C1, DE 101 45 630 A1 und DE 20 2005 004 399 U1 beschreiben jeweils die Fertigung eines Rades bzw. einer Radfelge aus Einzelteilen, wie einer hohlprofilierten Felge bzw. einem hohlprofilierten Felgenbett und einer Speicheneinheit bzw. einem Radstern, die form-/kraft-/oder stoffschlüssig zusammengefügt werden.

Bei der Radfelge nach der Druckschrift DE 41 23 459 C1 und der DE 20 2005 004 399 U1 besteht die Felge bzw. das Felgenbett aus Kunststoff und die sternförmige Radschüssel bzw. die innere Speicheneinheit aus Metall.

Bei der Radfelge nach der Druckschrift DE 101 45 630 A1 sind die einzelnen Bestandteile des Rades bzw. der Radfelge jeweils aus Faserverbundwerkstoff mit unterschiedlicher Verteilung und Ausrichtung der Faserstränge belastungsgerecht vorgefertigt, bevor sie zusammengefügt werden. Nach einer Ausführungsform sind die Einzelteile jeweils aus unidirektionalen Endlosfasersträngen gefertigt, wobei das Felgenbett in einem Wickelprozess und die Radschüssel bzw. der Radstern im bekannten Resin Transfer Moulding Verfahren hergestellt sind.

Die separate Vorfertigung der Bauelemente erfordert allerdings einen zusätzlichen Fügeprozess. Außerdem bilden die Verbindungen der Bauelemente bei hohen Belastungen kritische Schwachstellen und sind insbesondere bei der zu erwartenden mechanischen Belastung einer Radfelge problematisch. Beispielsweise muss die Verbindung zwischen dem Felgenbett und der Radschüssel hohe Drehmomente, besonders beim Bremsvorgang, aufnehmen. An die Verbindung der Bauelemente sind daher große Anforderungen gestellt, so dass der zusätzliche Fügeprozess mit einem erheblichen technischen Aufwand verbunden ist, wie in den Druckschriften DE 101 45 630 A1 und DE 20 2005 004 399 U1 ausführlich beschrieben ist.

Die aus Faserverbundwerkstoff vorgefertigten Bestandteile der Radfelge nach der Druckschrift DE 101 45 630 A1 sind miteinander verklebt. Allerdings belegt auch der Stand der Technik nach der Druckschrift DE 20 2005 004 399 U1, dass eine reine stoffliche Verbindung der Bauelemente für den Einsatz bei Radfelgen in der Kraftfahrzeugtechnik nicht zielführend ist, da die hiermit erreichbare mechanische Festigkeit und Temperaturbeständigkeit im Verbindungsbereich nicht ausreichen.

Aus der Druckschrift DE 10 2006 051 867 A1 ist ein aus faserverstärktem Kunststoff gewickeltes Rad, bestehend aus einem Radstern und einem Felgenbett, und ein Verfahren zu seiner Herstellung bekannt. Der Radstern wird aus mehreren Segmenten vorgefertigt, die durch Aufwickeln von harzgetränkten Fasern auf Wickelkerne ringförmig hergestellt werden. Anschließend werden die Ringe zur Sicherung der Formstabilität in einer Zentriervorrichtung eingelegt und zu einem Radstern zusammengefügt. Die Formstabilität der in die Zentriervorrichtung eingelegten Ringe wird durch Wickelkerne gesichert. Nachdem ein vollständiger Prozess der Aushärtung des Radsternes vollzogen ist, wird der Radstern aus der Zentriervorrichtung entnommen und mit einem metallischen oder aus kunstharzgetränkten Karbon-Langfasern hergestellten Felgenbett verbunden. Ein Felgenbett aus Faserrovings wird vor dem Aushärten des Radsterns an die außenliegenden Teile der Ringe des in der Zentriervorrichtung eingespannten Radsterns aufgewickelt. Nach der gewickelten Formgebung des Felgenbetts und Radstern härten Felgenbett und Radstern anschließend gemeinsam in der Zentriervorrichtung aus und werden hierbei stoffschlüssig verbunden.

Der Erfindung liegt die Aufgabe zugrunde, ein Verfahren zur Herstellung einer Radfelge aus Bauelementen bereitzustellen, bei dem die Bauelemente unter Gewährleistung einer hohen Festigkeit mit geringem fertigungstechnischem Aufwand verbunden werden können.

Die Aufgabe wird erfindungsgemäß mit den Merkmalen des Patentanspruches 1 gelöst.

Vorteilhafte Ausgestaltungen und Weiterbildungen der Erfindung ergeben sich aus den abhängigen Patentansprüchen 2 bis 12, der nachfolgenden Beschreibung und den zugehörigen Zeichnungen.

Erfindungsgemäß wird vorgeschlagen, dass während der Vorfertigungsphase zur Vorfertigung des Felgenbetts aus Faserverbundwerkstoff die Preform des Felgenbetts mit einer Radscheibe formschlüssig verbunden wird, wobei die Radscheibe derart dimensioniert ist und zwischen zwei Teilwerkzeugen des dem Formwerkzeugs angeordnet wird, dass beim Ablegen des Fasermaterials auf dem die Kontur des Felgenbetts abbildenden Formwerkzeug und der Radscheibe eine von der Umfangskontur des Formwerkzeugs abgesetzte Kontur der Radscheibe zumindest teilweise umschlossen wird.

Hierdurch werden bereits während der Vorfertigungsphase der Preform des Felgenbetts die Bauelemente derart formschlüssig zusammengefügt, dass eine zusammengesetzte Preform erreicht wird. Die durch das erfindungsgemäße Verfahren erzeugte formschlüssige Verbindung genügt, um das Gefüge zu fixieren und als eigenständiges Zwischenprodukt für nachfolgende Fertigungsschritte bereitzustellen. Der zusätzliche Fertigungsschritt des nachträglichen Fügens der Bauelemente wird hierdurch eingespart. Die formschlüssige Verbindung ermöglicht überdies eine in vielen Variationen ausgeprägte, belastungsgerechte Verbindung von Bauelementen gleicher oder verschiedener Materialien. Neben der Herstellung von aus verschiedenen Faserverbundwerkstoffen bestehenden mehrteiligen Radfelgen erlaubt das erfindungsgemäße Verfahren auch die Herstellung von aus verschiedenen Materialien bestehenden Hybrid-Radfelgen.

An eine Radscheibe sind gegenüber dem Felgenbett einer Radfelge besonders verschiedene Anforderungen gestellt. Durch das erfindungsgemäße Verfahren können diese Bauelemente mit höchst differenzierter Beschaffenheit, wie es bei der Radscheibe und dem Felgenbett der Fall ist, mit einfachen Mitteln und mit geringem fertigungstechnischem Aufwand zuverlässig zusammengefügt werden.

Bei dem erfindungsgemäßen Verfahren wird die Radscheibe derart dimensioniert und dem Formwerkzeug beigeordnet, dass beim Ablegen des Fasermaterials eine von der Umfangskontur des Formwerkzeug abgesetzte Kontur der Radscheibe zumindest teilweise umschlossen wird. Hierdurch wird mit besonders einfachen Mitteln eine ausreichende formschlüssige Verbindung erzeugt, nämlich durch Herausbildung einer von dem Formwerkzeug abgesetzten Kontur der beigeordneten Radscheibe, die während des Ablageprozesses des Fasermaterials auf dem Formwerkzeug zwangsläufig einen Einschluss durch das Fasermaterial erfährt. Dieser Einschluss gestaltet sich durch die von der Umfangskontur des Formwerkzeugs radial abgesetzte und axial an das Formwerkzeug angrenzende Kontur der Radscheibe als ein dreidimensionaler Formschluss der Preform des Felgenbetts mit der Radscheibe. Der dreidimensionale Formschluss führt zu einer verbesserten Festigkeit der Verbindung von Radscheibe und Felgenbett.

Diesbezüglich ist es vorgesehen, dass während der Vorfertigungsphase die Radscheibe zwischen zwei die Kontur des Felgenbetts abbildenden Teilwerkzeugen des Formwerkzeuges angeordnet ist.

In einer bevorzugten Ausführungsform des erfindungsgemäßen Verfahrens ist die Radscheibe derart dimensioniert und beigeordnet, dass sie im Verhältnis zum Umfang des Formwerkzeuges einen radialen, vorzugsweise umlaufenden Überstand über dem Formwerkzeug und/oder eine radiale, vorzugsweise umlaufende Vertiefung gegenüber dem Formwerkzeug bildet.

Damit ergeben sich über den Umfang des Formwerkzeuges nach außen bzw. nach innen weisende Absätze zwischen dem Formwerkzeug und der Radscheibe, die während des Faserablageprozesses eine unlösbare Hinterschnittverbindung mit vergrößerten Kontaktflächen zwischen der Preform des Felgenbetts und der Radscheibe ergeben. Dies verleiht der formschlüssigen Verbindung einen sicheren Halt und erhöht die Haftung zwischen den Bauelementen, was sich besonders vorteilhaft auf die Beanspruchbarkeit der Gesamtstruktur der gefügten Preform bzw. der fertig gestellten Radfelge auswirkt.

Nach der Vorfertigungsphase wird die erfindungsgemäß gefügte Preform konsolidiert.

In einer bevorzugten Ausführungsform des erfindungsgemäßen Verfahrens wird während der Konsolidierung der Preform des Felgenbetts die Preform mit der Radscheibe stoffschlüssig verbunden. Die Konsolidierung der Preform kann beispielsweise durch kurzzeitiges Aufschmelzen des Fasergeflechtes und Verharzen erfolgen. Durch die Aufschmelzung und Verharzung der Preform kann gleichzeitig eine gemeinsame Verklebung der formschlüssig fixierten Bauelemente erfolgen. So wird in demselben Fertigungsschritt neben der Verfestigung der Preform zugleich und unmittelbar die für die Stabilität der Radfelge erforderliche unlösbare Verbindung der Bauelemente realisiert. Auch hieraus ergeben sich erhebliche fertigungstechnische Einsparungen.

In vorteilhaften Ausführungsformen des Verfahrens kann die Preform durch Umflechten des Formwerkzeuges mittels Faserflechtfäden und/oder durch Bandwickeln von Fasersträngen um das Formwerkzeug und/oder durch Tapelegen von textilem flächigem Fasermaterial auf das Formwerkzeug gebildet werden, die bedarfsgerecht zur Herstellung des Bauteils angewendet werden können. Je nach dem Einsatzfall der herzustellenden Radfelge sorgen die verschiedenen Auflageprozesse für eine gute Anpassung des Fasermaterials an die Kontur des Formwerkzeuges und der mitgeführten Radscheibe.

Beim Umflechten werden das Formwerkzeug und die mitgeführte Radscheibe als Flechtkern von Flechtfäden umflochten, die von einem den Flechtkern koaxial umlaufenden Flechtrahmen zugeführt werden. Der Flechtkern bewegt sich dazu axial vor und zurück, so dass hierbei die Ablage der Flechtfäden auf dem Flechtkern bzw. dem Formwerkzeug und der mitgeführten Radscheibe axial, in Richtung der Drehachse des Flechtrahmens, erfolgt. Die maschinelle Umflechtung des Formwerkzeuges ermöglicht mittels eines gesteuerten Flechtprozess die Strukturen des auf dem Formwerkzeug abgelegten Fasergeflechts individuell zu gestalten und somit Preformen (und folglich Bauelemente) mit örtlich differenzierter Beschaffenheit zu erzeugen.

Bei dem Bandwickel- und Tapelegeprozess wird hingegen ein strang- oder bandförmiges Fasermaterial tangential auf das sich drehende Formwerkzeug und die mitgeführte Radscheibe appliziert, wodurch alternative Ablagestrukturen des Fasermaterials erzeugt werden können. Durch die Rotation der Einheit aus Formwerkzeug und Radscheibe wird das Endlos-Fasermaterial von Vorratstrommeln straff auf das Formwerkzeug und die mitgeführte Radscheibe aufgezogen. Das strang- oder bandförmige Fasermaterial kann vorkonfektionierte Fasergelege oder -gewebe sein. Das bandförmige Fasermaterial kann auch ein Fasergeflecht aus Flechtfäden sein, welches für eine besonders gute Anpassung an die Kontur des Formwerkzeuges und der mitgeführten Radscheibe sorgt.

In einer vorteilhaften Ausgestaltung des Verfahrens wird das Fasermaterial durch eine Stützvorrichtung an die Kontur des Formwerkzeuges und/oder an die Kontur der Radscheibe angedrückt. Damit kann eine kontrollierte Feinpositionierung der Ablage des Fasermaterials an die jeweiligen Konturen erfolgen, wodurch die Genauigkeit der Anformung an die vorgegebenen Konturen erhöht werden kann. Insbesondere kann hierdurch das korrekte Anlegen des Fasermaterials im Bereich der formschlüssigen Verbindung gesichert werden, was die Zuverlässigkeit der Verbindung erhöht.

Vorzugsweise weist die Stützvorrichtung drehbewegliche Führungselemente auf. Somit kann während der Rotation des Formwerkzeuges oder infolge einer koaxialen Rotation der Stützvorrichtung um das Formwerkzeug eine Relativbewegung der Führungselemente gegenüber dem Formwerkzeug erzeugt werden. Dadurch kann der Anformungs- und Anpressvorgang des Fasermaterials vereinfacht und beschleunigt werden.

Im Interesse der Leichtbauweise besteht die Radscheibe aus Faserverbundwerkstoff. Der Einsatz von Faserverbundwerkstoff ermöglicht es außerdem, spezifische, an die mechanischen und thermischen Belastungen angepasste Verstärkungsstrukturen im Bauteil vorzusehen. Die Radscheibe kann beispielsweise ein bereits konsolidiertes Faserverbundteil mit einer vom Faserverbundwerkstoff des Felgenbetts abweichender Faserstruktur sein.

Alternativ besteht die Radscheibe aus Metall, da es für bestimmte Einsatzfälle der Radfelge eine besondere thermische Belastbarkeit und Festigkeit verleiht.

Beide Werkstoffarten sind bei der Fertigung von Radfelgen von Bedeutung, je nach dem für welchen Zweck die Radfelgen vorgesehen sind. Beispielsweise kann bei einer Radfelge mit einem zu erwartenden intensiven Bremsbetrieb ein Bauelement aus Metall als Radscheibe vorgesehen sein und erfindungsgemäß mit einem Felgenbett aus Faserverbundwerkstoff verbunden werden, so dass die beim Bremsen erzeugte Wärme gut von der Bremsscheibe abgeleitet werden kann. Bei dieser Hybrid-Radfelge in Kombination aus einem Felgenbett aus Faserverbundwerkstoff und einer Radscheibe aus Metall bleibt die Leichtbauweise weitestgehend erhalten.

Vorzugsweise ist die in der Vorfertigungsphase mit der Preform des Felgenbetts zu verbindende Radscheibe ein Preformling aus Fasermaterial, welches noch zu verschmelzen ist und/oder mit Fasermatrixmaterial zu versetzen ist. Diese Halbzeuge eignen sich besonders für die erfindungsgemäße Verbundtechnologie zur Herstellung der mehrteiligen Radfelge. Ist ein solcher Preformling vorgesehen, kann die Konsolidierung des Preformlings gemeinsam mit der Konsolidierung der Preform des Felgenbetts erfolgen, was zu weiteren fertigungstechnischen Einsparungen führt.

Die Variationsmöglichkeiten für die Herstellung der mehrteiligen Radfelge erhöhen sich auch durch die Verwendung eines mehrteilig ausgebildeten Formwerkzeugs. Das mehrteilige Formwerkzeug kann unter Beiordnung oder Einschluss diverser Bauelemente, zu einer individuellen Werkzeugeinheit komplettiert werden, auf die anschließend zur Formgebung der Preform des Felgenbetts das Fasermaterial abgelegt wird.

Die Konsolidierung der Preform und/oder des Preformlings mittels einer Injektion, vorzugsweise mittels Harzinjektion, intensiviert zugleich den strukturellen wie auch den verbindenden Stoffschluss, was folglich die Wirtschaftlichkeit und Qualität der Bauteilfertigung, insbesondere der Fertigung der Radfelge, verbessert.

Zudem ist es vorteilhaft, wenn bei der Konsolidierung der Preform und/oder des Preformlings ein Gegenformwerkzeug eingesetzt wird. Das Gegenformwerkzeug, welches z. B. die äußere Kontur des Felgenbetts der Preform abbildet, unterstützt das korrekte Anlegen und Fixieren des Fasermaterials auf dem Formwerkzeug und der beigeordneten Radscheibe während der Konsolidierung. Insbesondere kann hierdurch das korrekte Anlegen des Fasermaterials im Bereich der formschlüssigen Verbindung gesichert werden.

Nachstehend wird das erfindungsgemäße Verfahren anhand eines Ausführungsbeispiels näher erläutert. Die zugehörigen Zeichnungen zeigen in einer schematischen Darstellung in
- Fig. 1: einen Ausschnitt einer Bandwickelanordnung mit einem zweiteiligem Formwerkzeug eines Felgenbettes einer Radfelge und einem zwischenliegendem Preformling einer Radscheibe der Radfelge in einer Seiten- und Schnittansicht,
- Fig. 2a: eine Detailansicht X der Werkzeugeinheit nach Fig. 1 in einer ersten Variante der Verbindung der Preformlings der Radscheibe mit der Preform des Felgenbettes,
- Fig. 2b: eine Detailansicht X der Werkzeugeinheit nach Fig. 1 in einer zweiten Variante der Verbindung eines Preformlings der Radscheibe mit der Preform des Felgenbettes,
- Fig. 2c: eine Detailansicht X der Werkzeugeinheit nach Fig. 1 in einer dritten Variante der Verbindung eines Preformlings der Radscheibe mit der Preform des Felgenbettes
- Fig. 3: eine stilisierte Ansicht eines zweiteiligen Formwerkzeuges mit einem Preformling einer Radscheibe in einer ersten Herstellungsphase der Radfelge,
- Fig. 4: Ansicht der Werkzeugeinheit nach Fig. 3 in einer zweiten Herstellungsphase der Radfelge,
- Fig. 5: Ansicht der Werkzeugeinheit nach Fig. 3 in einer dritten Herstellungsphase der Radfelge,
- Fig. 6: Ansicht der Werkzeugeinheit nach Fig. 3 in einer vierten Herstellungsphase der Radfelge,
- Fig. 7: Ansicht der Werkzeugeinheit nach Fig. 3 in einer fünften Herstellungsphase der Radfelge,
- Fig. 8: stilisierte Ansicht einer gefügten Preform der Radfelge in einer sechsten Herstellungsphase der Radfelge.

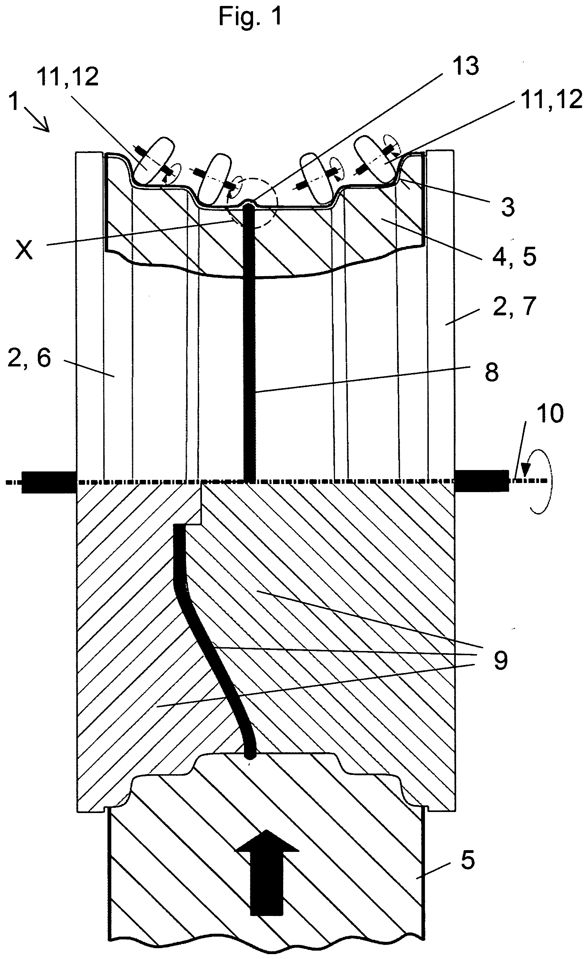

- Fig. 1: zeigt einen Ausschnitt einer Bandwickelanordnung 1 mit einem Formwerkzeug 2, das an seinem Umfang die Kontur 3 eines Felgenbettes einer Radfelge abbildet. Zur Herstellung einer Preform 4 des Felgenbettes aus Faserverbundwerkstoff wird ein textiles flächiges Fasermaterial 5 auf das Formwerkzeug 2 aufgewickelt.

Das Formwerkzeug 2 besteht aus zwei Teilwerkzeugen 6, 7 zwischen denen ein Preformling 8 aus strukturverstärkten TFP-Fasergelege (TFP-TAILORED FIBER PLACEMENT) für die Fertigung einer Radscheibe angeordnet ist. Diese Anordnung aus Teilwerkzeugen 6, 7 und zwischengelagerten Preformling 8 bildet eine Werkzeugeinheit 9 der Bandwickelanordnung 1.

Durch Rotation der Werkzeugeinheit 9 um eine Rotationsachse 10 wird das Endlos-Fasermaterial 5 von einer nicht dargestellten Vorratstrommel straff auf das Formwerkzeug 2 und den mitgeführten Preformling 8 aufgewickelt. Das bandförmige Fasermaterial 5 ist in diesem Ausführungsbeispiel ein vorkonfektioniertes Fasergelege.

Bei der Umwicklung der Werkzeugeinheit 9 mit dem bandförmigen Fasermaterial 5 wird dieses formschlüssig an der Umfangsfläche des Formwerkzeuges 2 und der Umfangsfläche des Preformlings 8 angelegt und bildet so die Preform 4 des Felgenbettes.

Das Fasermaterial 5 wird mittels einer stationären Stützvorrichtung 11 mit Andruckrollen 12 zusätzlich geführt und entsprechend der umlaufenden Kontur des Formwerkzeuges 2 auf diesem fixiert. Die Andruckrollen 12 sind jeweils auf einen Übergang der Umfangskontur des Formwerkzeuges 2 ausgerichtet. Während der Rotation des Formwerkzeuges 2 um die Rotationsachse 10 wird in einer Relativbewegung der Andruckrollen 12 gegenüber dem Formwerkzeug 2 das Fasermaterial 5 entlang der Umfangskontur des Formwerkzeuges 2 angedrückt.

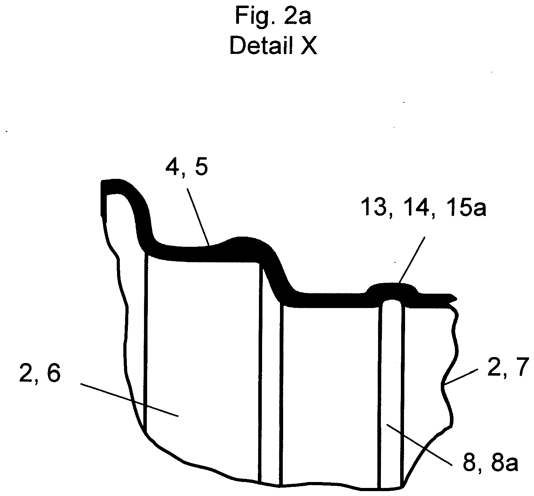

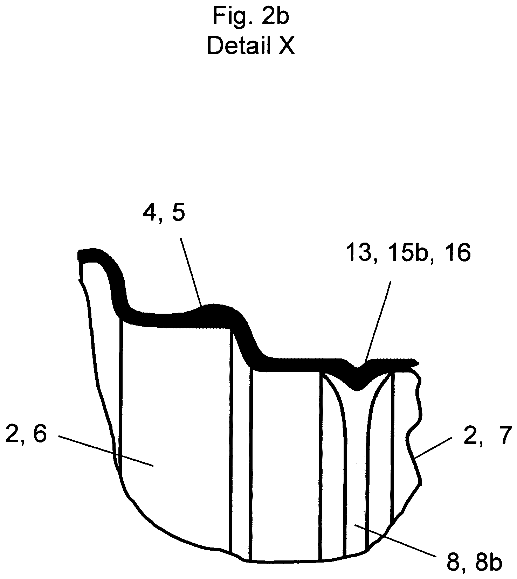

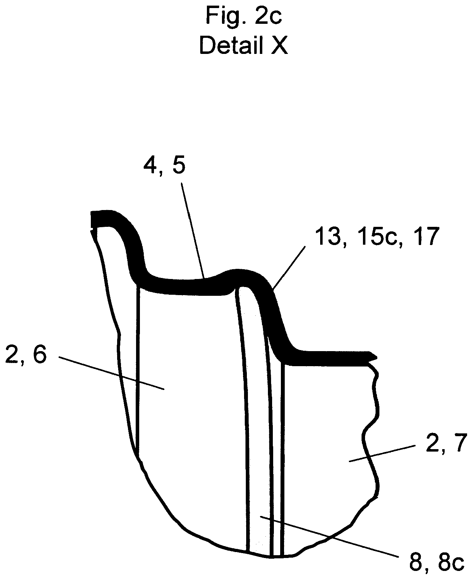

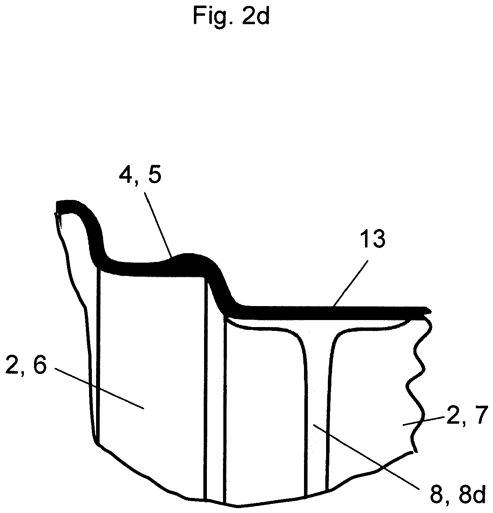

Das gestrichelt eingekreiste Detail X in Fig. 1 zeigt eine umlaufende Verbindungsstelle 13 der Preform 4 mit dem Preformling 8, die in Fig. 2a in einem vergrößerten Auszug der Werkzeugeinheit 9 wiedergegeben ist. Die Fign. 2b und 2c zeigen alternative Anbindungsvarianten zur Verbindungsstelle 13 nach Fig. 2a. Die Verbindungsstelle 13 in Fig. 2a wird durch einen Preformling 8a gebildet, dessen umlaufender Rand einen radialen, umlaufenden Überstand 14 über das Formwerkzeug 2, respektive über dessen beide Teilwerkzeuge 6, 7 aufweist, so dass eine Hinterschnittverbindung 15a mit einer konvexen Ausformung des aufliegenden Fasermaterials 5 entlang der Kontur 3 des Felgenbettes entsteht. Fig. 2b zeigt einen Preformling 8b, dessen umlaufender Rand eine radiale, umlaufende Vertiefung 16 gegenüber dem Formwerkzeug 2, respektive über dessen beide Teilwerkzeuge 6, 7 aufweist, so dass eine Hinterschnittverbindung 15b mit einer konkaven Ausnehmung des aufliegenden Fasermaterials 5 entlang der Kontur 3 des Felgenbettes entsteht. Die Vertiefung 16 kann, wie in Fig. 2b gezeigt, beispielsweise durch Drapieren des umlaufenden Randes des Preformlings 8 erzeugt werden.

Fig. 2c zeigt einen Preformling 8c in Anbindung an einen radialen Übergang 17 der Kontur 3 des Felgenbettes zwischen einem Hochbett und einem Tiefbett. Hiermit ergibt sich eine Hinterschnittverbindung 15c mit seitlicher Anlage des Fasermaterials 5 an dem Preformling 8.

Das Anlegen des Fasermaterials 5 im Bereich der umlaufenden formschlüssigen Hinterschnittverbindungen 15a, 15b, 15c kann zusätzlich durch spezielle, auf die jeweilige Hinterschnittverbindung 15a, 15b, 15c ausgerichtete und angepasste Andruckrollen (nicht dargestellt) unterstützt und präzisiert werden.

Damit wird in der Vorfertigungsphase zur Herstellung der Preform 4 des Felgenbettes als ein Bauelement der Radfelge zugleich der Fügevorgang mit anderen Bauelementen (hier betreffend den Preformling 8 in seinen alternativen Ausprägungen 8a, 8b, 8c) integriert und beide Vorgänge fertigungstechnisch zu einem Fertigungsvorgang verknüpft. Die derart erzeugten und verbundenen Bauelemente bilden die zusammengesetzte Preform 18 der Radfelge.

Die Bauelemente werden während des Konsolidierungsprozesses in ihrem Kontaktbereich miteinander verschmolzen und verharzt und ergeben so die fertige Radfelge. Die Hinterschnittverbindungen 15a, 15b, 15c vergrößern dabei nicht nur den Formschluss zwischen der Preform 4 des Felgenbettes und dem Preformling 8a, 8b oder 8c sondern auch die für den Stoffschluss zur Verfügung gestellten Kontaktflächen. Dies ergibt eine hohe mechanische Beanspruchbarkeit der Gesamtstruktur der Preform 18 der Radfelge und der fertiggestellten Radfelge.

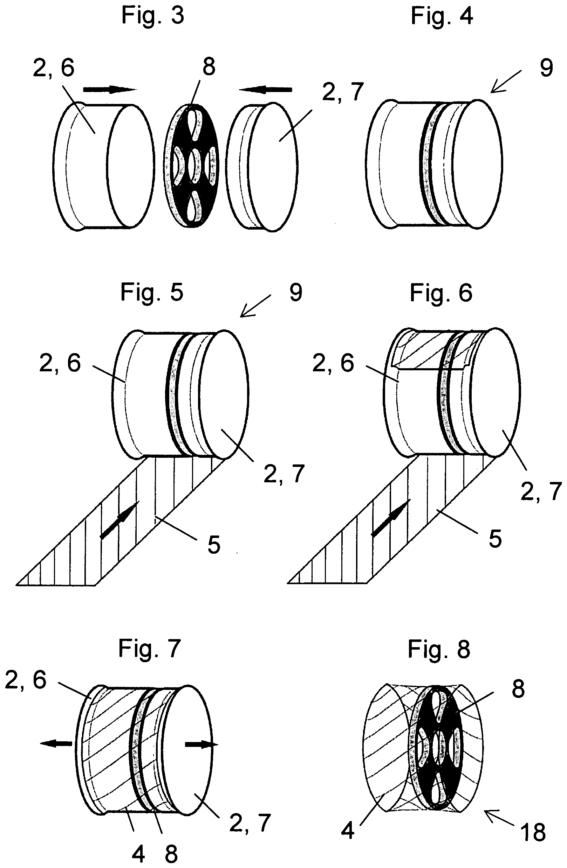

In den Figuren 3 bis 8 wird der Verlauf der erfindungsgemäßen Herstellung einer Radfelge in sechs Herstellungsphasen stilisiert dargestellt.

In einer ersten Herstellungsphase nach Fig. 3 werden die beiden Teilwerkzeuge 6, 7 des Formwerkzeuges 2, welche jeweils einen Teil der Kontur 3 des Felgenbettes der Radfelge abbilden, unter Zwischenlage des Preformlings 8 für die Radscheibe zur Werkzeugeinheit 9 zusammengefügt.

Gemäß Fig. 4 wird die komplettierte Werkzeugeinheit 9 für den maschinellen Bandwickelprozess bereitgestellt.

In einer dritten und vierten Herstellungsphase nach Fig. 5 und 6 wird die Werkzeugeinheit 9 in Rotation versetzt und dabei das bandförmige Fasermaterial 5 auf die Werkzeugeinheit 9 aufgezogen, wobei diese mehrfach mit dem Fasermaterial 5 umwickelt wird. Hierbei wird die Preform 4 des Felgenbettes gebildet und gleichzeitig mit dem Preformling 8 formschlüssig verbunden.

Fig. 7 zeigt die Herstellungsphase der Entformung der aus der Preform 4 und des Preformling 8 verbundenen Preform 18 der Radfelge. Die beiden Teilwerkzeuge 6, 7 des Formwerkzeuges 2 seitwärts in der jeweils gezeigten Pfeilrichtung entfernt.

In Fig. 8 ist die entformte Preform 18 der Radfelge dargestellt, welche die Preform 4 des Felgenbettes in Verbindung mit dem Preformling 8 der Radscheibe umfasst. Dieser Preform 18 bildet das Zwischenprodukt vor deren Konsolidierung auf dem Weg zur Fertigstellung der Radfelge. Der Vorgang der Konsolidierung kann alternativ auch vor der Entformung der Preform 18, also vor dem Entfernen der Teilwerkzeuge 6, 7 des Formwerkzeuges 2 in der Herstellungsphase nach Fig. 7 erfolgen.

Mit dem vorbeschriebenen, erfindungsgemäßen Verfahren kann die Herstellung der Radfelge durchgängig maschinell erfolgen, wobei das maschinelle Verbinden der Bauelemente 4, 8 der Radfelge zuverlässig und mit geringem fertigungstechnischem Aufwand erfolgt.

### Bezugszeichenliste

- 1: Bandwickelanordnung
- 2: Formwerkzeug
- 3: Kontur des Felgenbettes
- 4: Preform des ersten Bauelementes, Preform des Felgenbettes,
- 5: Fasermaterial
- 6: Teilwerkzeug des Formwerkzeuges
- 7: Teilwerkzeug des Formwerkzeuges
- 8: zweites Bauelement, Preformling der Radscheibe a, b, c
- 9: Werkzeugeinheit
- 10: Rotationsachse der Werkzeugeinheit
- 11: Stützvorrichtung
- 12: Führungselemente, Andruckrollen
- 13: Verbindungsstelle
- 14: umlaufender Überstand
- 15: Hinterschnittverbindung a, b, c
- 16: umlaufende Vertiefung
- 17: radialer Übergang der Kontur des Felgenbettes
- 18: Preform der Radfelge

## Patentansprüche

1. Verfahren zur Herstellung einer Radfelge zum Einsatz in der Kraftfahrzeugtechnik, bestehend aus einem Felgenbett aus Faserverbundwerkstoff und einer Radscheibe (8), wobei in einer Vorfertigungsphase zur Vorfertigung des Felgenbetts eine Preform (4) des Felgenbetts als Zwischenprodukt gebildet wird, wobei die Preform (4) durch Ablage eines Fasermaterials (5) auf einem die Kontur (3) des Felgenbetts abbildenden Formwerkzeug (2) zu einem Fasergebilde entsprechend der Bauteilgeometrie des Felgenbetts geformt wird, und nach der Vorfertigungsphase die Preform (4) des Felgenbetts durch Konsolidierung verfestigt wird, **dadurch gekennzeichnet, dass** während der Vorfertigungsphase die sich bildende Preform (4) des Felgenbetts mit der Radscheibe (8) formschlüssig verbunden wird, wobei die Radscheibe (8) derart dimensioniert ist und zwischen zwei Teilwerkzeugen (6, 7) des Formwerkzeuges (2) angeordnet wird, dass beim Ablegen des Fasermaterials (5) auf dem die Kontur (3) des Felgenbetts abbildenden Formwerkzeug (2) und der Radscheibe (8) eine von der Umfangskontur des Formwerkzeugs (2) abgesetzte Kontur der Radscheibe (8) zumindest teilweise umschlossen wird.

2. Verfahren nach Anspruch 1, **dadurch gekennzeichnet, dass** die Radscheibe (8) derart dimensioniert und angeordnet ist, dass sie im Verhältnis zur Umfangskontur des Formwerkzeuges (2) einen radialen, vorzugsweise umlaufenden Überstand (14) über dem Formwerkzeug (2) und/oder eine radiale, vorzugsweise umlaufende Vertiefung (16) gegenüber dem Formwerkzeug (2) bildet.

3. Verfahren nach Anspruch 1 oder 2, **dadurch gekennzeichnet, dass** während der Konsolidierung der Preform (4) des Felgenbetts die Preform (4) mit der Radscheibe (8) stoffschlüssig verbunden wird.

4. Verfahren nach einem der Ansprüche 1 bis 3, **dadurch gekennzeichnet, dass** die Preform (4) durch Umflechten des Formwerkzeuges (2) mittels Faserflechtfäden und/oder durch Bandwickeln von Fasersträngen um das Formwerkzeug (2) und/oder durch Tapelegen von textilem flächigem Fasermaterial auf das Formwerkzeug (2) gebildet wird.

5. Verfahren nach einem der Ansprüche 1 bis 4, **dadurch gekennzeichnet, dass** das Fasermaterial (5) durch eine Stützvorrichtung (11) an die Kontur des Formwerkzeuges (2) und/oder an die Kontur der Radscheibe (8) angedrückt wird.

6. Verfahren nach einem der Ansprüche 1 bis 5, **dadurch gekennzeichnet, dass** die Stützvorrichtung (11) drehbewegliche Führungselemente (12) aufweist.

7. Verfahren nach einem der Ansprüche 1 bis 6, **dadurch gekennzeichnet, dass** die Radscheibe (8) aus Faserverbundwerkstoff oder aus Metall besteht.

8. Verfahren nach einem der Ansprüche 1 bis 6, **dadurch gekennzeichnet, dass** die in der Vorfertigungsphase mit der Preform (4) zu verbindende Radscheibe (8) ein Preformling (8a, b, c) ist, der aus Fasermaterial besteht.

9. Verfahren nach einem der Ansprüche 1 bis 8, **dadurch gekennzeichnet, dass** das Formwerkzeug (2) mehrteilig ausgebildet ist.

10. Verfahren nach einem der Ansprüche 1 bis 9, **dadurch gekennzeichnet, dass** die Konsolidierung der Preform (4) und/oder des Preformlings (8a, b, c) mittels einer Injektion, vorzugsweise mittels Harzinjektion, erfolgt.

11. Verfahren nach einem der Ansprüche 1 bis 10, **dadurch gekennzeichnet, dass** bei der Konsolidierung der Preform (4) und/oder des Preformlings (8 a, b, c) ein Gegenformwerkzeug eingesetzt wird.

## Claims

1. Method for producing a wheel rim for use in automotive engineering, consisting of a rim base made from fibre-reinforced composite and a wheel disc (8), whereby in a prefabrication phase for the prefabrication of the rim base, a preform (4) of the rim base is generated by way of an intermediate product, whereby the preform (4) is shaped through the deposition of a fibrous material (5) on a mould (2) that models the contour (3) of the rim base into a fibrous structure corresponding to the component geometry of the rim base, and after the prefabrication phase the preform (4) of the rim base is strengthened by means of consolidation, **characterised in that** during the prefabrication phase, the preform (4) of the rim base generated is joined to the wheel disc (8) in a form-fit manner, whereby the wheel disc (8) is of such dimensions and arranged between two mould sections (6, 7) of the mould (2) such that during the deposition of the fibrous material (5) on the mould (2) that models the contour (3) of the rim base and on the wheel disc (8), a contour of the wheel disc (8) offset¹ vis-à-vis the peripheral contour of the mould (2) is at least partly enclosed.

2. Method in accordance with Claim 1, **characterised in that** the wheel disc (8) is of such dimensions and arranged such that, in relation to the peripheral contour of the mould (2), it forms a radial projection (14), preferably going all the way round, over the mould (2) and/or a radial recess (16), preferably going all the way round, vis-à-vis the mould (2).
¹ Translator's note: The German original here can also mean 'stepped'

3. Method in accordance with Claim 1 or 2, **characterised in that** during the consolidation of the preform (4) of the rim base, the preform (4) is joined to the wheel disc (8) by means of a substance-to-substance bond.

4. Method in accordance with one of Claims 1 to 3, **characterised in that** the preform (4) is generated by braided threads being woven around the mould (2) and/or through strip-winding of fibre bundles around the mould (2) and/or tape laying of flat, textile fibrous material onto the mould (2).

5. Method in accordance with one of Claims 1 to 4, **characterised in that** the fibrous material (5) is, by means of a support device (11), pressed onto the contour of the mould (2) and/or pressed onto the contour of the wheel disc (8).

6. Method in accordance with one of Claims 1 to 5, **characterised in that** the support device (11) has rotating guide elements (12).

7. Method in accordance with one of Claims 1 to 6, **characterised in that** the wheel disc (8) is made from fibre-reinforced composite or from metal.

8. Method in accordance with one of Claims 1 to 6, **characterised in that** the wheel disc (8) that is to be joined to the preform (4) in the prefabrication phase is a preformed part² (8a, b, c) consisting of fibrous material.

9. Method in accordance with one of Claims 1 to 8, **characterised in that** the mould (2) is constructed from several parts.

10. Method in accordance with one of Claims 1 to 9,
² Translator's note: Here, the German uses 'Preformling' as opposed to 'Preform' to draw a distinction. The English would usually be 'preform' for both.
**characterised in that** the consolidation of the preform (4) and/or of the preformed part (8a, b, c) takes place be means of an injection, preferably through an injection of resin.

11. Method in accordance with one of Claims 1 to 10, **characterised in that** during the consolidation of the preform (4) and/or of the preformed part (8a, b, c) a counter-mould is used.

## Revendications

1. Procédé de production d'une jante de roue pour le secteur automobile, composée d'une embase de jante en matériau composite à base de fibres et d'un disque de roue (8), une préforme (4) de l'embase de jante étant réalisée en tant que produit intermédiaire au cours d'une phase de préfabrication de l'embase de jante, la préforme (4) étant réalisée par dépôt d'un matériau à base de fibres (5) sur un outil de formage (2) reproduisant le contour (3) de l'embase de jante pour constituer une structure fibreuse correspondant à la géométrie de l'embase de jante, la préforme (4) de l'embase de jante étant solidifiée par consolidation après la phase de préfabrication, **caractérisé en ce que** la préforme (4) de l'embase de jante réalisée pendant la phase de préfabrication est assemblée avec le disque de roue (8) par complémentarité de forme, le disque de roue (8) étant dimensionné et disposé entre deux parties (6, 7) de l'outil de formage (2) de manière à créer au moins partiellement, lors du dépôt du matériau à base de fibres (5) sur l'outil de formage (2) constituant le contour (3) de l'embase de jante et sur le disque de roue (8), un contour du disque de roue (8) correspondant au contour périphérique de l'outil de formage (2).

2. Procédé selon la revendication 1, **caractérisé en ce que** le disque de roue (8) est dimensionné et disposé de manière à former, par rapport au contour périphérique de l'outil de formage (2), une saillie radiale de préférence périphérique (14) au-dessus de l'outil de formage (2) et/ou une cavité radiale, de préférence périphérique (16) par rapport à l'outil de formage (2).

3. Procédé selon la revendication 1 ou 2, **caractérisé en ce que** pendant la consolidation de la préforme (4) de l'embase de jante, la préforme (4) est assemblée au disque de roue (8) par liaison de matière.

4. Procédé selon l'une des revendications 1 à 3, **caractérisé en ce que** la préforme (4) est constituée sur l'outil de formage (2) par tressage de l'outil de formage (2) au moyen de fils de tressage en fibres et/ou par enroulage d'une bande de faisceaux de fibres autour de l'outil de formage (2) et/ou par pose d'une bande de matériau textile plat à base de fibres sur l'outil de formage (2).

5. Procédé selon les revendications 1 à 4, **caractérisé en ce que** le matériau à base de fibres (5) est pressé par un dispositif d'appui (11) sur le contour de l'outil de formage (2) et/ou sur le contour du disque de roue (8).

6. Procédé selon l'une des revendications 1 à 5, **caractérisé en ce que** le dispositif d'appui (11) est doté d'éléments de guidage (12) mobiles en rotation.

7. Procédé selon l'une des revendications 1 à 6, **caractérisé en ce que** le disque de roue (8) se compose de matériau composite à base de fibres ou de métal.

8. Procédé selon l'une des revendications 1 à 6, **caractérisé en ce que** le disque de roue (8) à assembler avec la préforme (4) lors de la phase de préfabrication constitue une ébauche (8a, b, c) composée de matériau à base de fibres.

9. Procédé selon l'une des revendications 1 à 8, **caractérisé en ce que** l'outil de formage (2) se compose de plusieurs parties.

10. Procédé selon l'une des revendications 1 à 9, **caractérisé en ce que** la consolidation de la préforme (4) et/ou de l'ébauche (8a, b, c) s'effectue au moyen d'une injection, de préférence au moyen d'une injection de résine.

11. Procédé selon l'une des revendications 1 à 10, **caractérisé en ce que** lors de la consolidation de la préforme (4) et/ou de l'ébauche (8 a, b, c), un contre-outil de formage est utilisé.
